# FASCICULE DE BREVET EUROPEEN

(11) **EP 1 522 960 B1**
(45) Date de publication et mention de la délivrance du brevet: **19.10.2016**
(21) Numéro de dépôt: 04292243.5
(22) Date de dépôt: 20.09.2004
(51) Int. Cl.: G06T 1/00

(54) **Procédé de prise de vues à bord d'un corps volant tournant et système le mettant en oeuvre**
Vorrichtung zur Bildaufnahme an Bord eines rotierenden Flugkörpers und dazugehöriges System
Image acquisition process on board a rotating flying body and associated system

(30) Priorité: 06.10.2003 FR 0311659
(43) Date de publication de la demande: 13.04.2005
(73) Titulaire: MBDA France, 75016 Paris (FR)
(72) Inventeur: Longuet, Bernard, 92290 Chatenay-Malabry (FR); Teneze, Bernard, 18570 Trouy (FR)
(74) Mandataire: Gevers & Orès

(56) Documents cités:
- EP-A- 0 447 080
- EP-A- 0 948 197
- US-A- 4 637 571
- US-A- 4 796 834
- US-A- 5 173 945
- US-A- 5 577 182

## Description

La présente invention concerne un procédé pour la formation, sur un afficheur disposé à poste fixe, d'images successives d'une scène vers laquelle se déplace un corps volant, en rotation autour de son axe longitudinal. Elle concerne également un système mettant en oeuvre ce procédé.

Quoique non exclusivement, l'invention est particulièrement appropriée au guidage d'un missile d'attaque tournant, en direction d'une cible et elle sera plus spécialement expliquée ci-après en rapport avec cette application.

On sait que de tels missiles tournants sont lancés et guidés vers leur cible (par exemple un char) au moyen d'un poste de tir, disposé à poste fixe, pourvu d'un appareil de prise de vues et d'un afficheur. Ainsi, un opérateur peut observer sur ledit afficheur les images successives de la scène dans laquelle se trouve ladite cible, images qui sont adressées audit afficheur par ledit appareil de prise de vues et qui servent à l'opérateur pour guider ledit missile vers la cible.

Un tel système présente l'inconvénient que le missile lui-même apparaît sur lesdites images, de sorte que les flammes et/ou les fumées émises par son propulseur cachent en partie ladite scène, ce qui peut nuire à la précision du guidage dudit missile.

Pour tenter de remédier à un tel inconvénient, on pourrait penser, par analogie avec certains missiles stabilisés en roulis sur leur trajectoire, à monter une caméra à bord dudit missile tournant. Mais alors il serait indispensable de prévoir une plate-forme stabilisée en roulis pour recevoir ladite caméra. Or, le coût d'une telle plate-forme stabilisée est important et il ne serait pas conforme au bon sens d'en utiliser une à bord d'un missile dont la destruction est inéluctable au premier usage.

La présente invention a pour objet de remédier à ces inconvénients.

A cette fin, selon l'invention, le procédé pour la formation, sur un afficheur disposé à un poste fixe, d'images successives d'une scène vers laquelle se déplace un corps volant en rotation autour de son axe longitudinal, ledit corps volant communiquant avec ledit poste fixe grâce à des moyens de liaison, est remarquable en ce que :
- on fixe rigidement un appareil de prise de vues à l'avant dudit corps volant, de façon que ledit appareil de prise de vues tourne avec ledit corps volant autour dudit axe longitudinal ;
- pendant chaque tour de la rotation dudit corps volant autour dudit axe longitudinal, on prend, avec ledit appareil, plusieurs vues de ladite scène correspondant chacune à une position angulaire prédéterminée dudit corps volant autour dudit axe longitudinal, de sorte que les contours desdites vues sont inclinés de façons différentes les uns par rapport aux autres et que, dans chaque vue, l'image de ladite scène et ledit contour occupent une position relative qui dépend de ladite position angulaire prédéterminée correspondante dudit corps volant et qui est différente de celle des autres vues ;
- parmi lesdites vues, on détermine une vue de référence dans laquelle ladite position relative entre l'image de la scène et le contour est considérée comme une position relative de référence ;
- dans chaque vue, autre que la vue de référence, on applique à l'image de ladite scène un traitement de transformation géométrique d'image pour que la position relative de l'image transformée de ladite scène par rapport au contour soit semblable à ladite position relative de référence ; et
- on affiche successivement sur ledit afficheur ladite vue de référence et lesdites vues ayant subi ledit traitement de transformation géométrique d'image.

Ainsi, l'image dudit corps volant ne peut se trouver sur lesdites vues et il n'est pas nécessaire de prévoir une plate-forme stabilisée sur ledit corps volant tournant.

Un système mettant en oeuvre le procédé de l'invention et comportant :
- au moins un corps volant, tournant autour de son axe longitudinal lorsqu'il vole ;
- un poste fixe, muni d'un afficheur apte à afficher des images successives d'une scène vers laquelle se déplace en tournant ledit corps volant ; et
- des moyens de liaison permettant les communications entre ledit corps volant et ledit poste fixe,
est remarquable en ce qu'il comporte de plus :
- un appareil de prise de vues, fixé rigidement à l'avant dudit corps volant pour observer ladite scène ;
- des moyens pour la commande dudit appareil de prise de vues à chacune de plusieurs positions angulaires prédéterminées dudit corps volant autour dudit axe longitudinal ; et
- des moyens de traitement de transformation géométrique d'image permettant de présenter les vues prises par ledit appareil à des positions angulaires différentes avec une position relative semblable de l'image de ladite scène par rapport au contour desdites vues.

De préférence, lesdits moyens de commande de l'appareil de prise de vues sont constitués par un système gyroscopique monté à bord dudit corps volant et sensible à la rotation de ce dernier autour de son axe longitudinal.

En revanche, pour des raisons évidentes de charge utile à bord du corps volant, il est avantageux que lesdits moyens de traitement d'image soient disposés au poste fixe. Dans ce cas, la liaison entre ledit appareil de prise de vues et lesdits moyens de traitement d'image peut être réalisée par lesdits moyens de liaison entre ledit corps volant et ledit poste fixe.

Par ailleurs, il est avantageux que le fonctionnement desdits moyens de traitement d'image soit commandé par ledit système gyroscopique par l'intermédiaire desdits moyens de liaison entre ledit corps volant et ledit poste fixe.

En cas d'un éclairement de ladite scène insuffisant pour des prises de vues satisfaisantes de ladite scène, le système conforme à la présente invention peut comporter des moyens d'illumination, montés à bord dudit corps volant et aptes à éclairer ladite scène. Le fonctionnement desdits moyens d'illumination peut être synchronisé avec celui dudit appareil de prise de vues. De préférence, lesdits moyens d'illumination sont intégrés à ce dernier.

Les figures du dessin annexé feront bien comprendre comment l'invention peut être réalisée. Sur ces figures, des références identiques désignent des éléments semblables.
La figure 1 illustre, de façon schématique, un système faisant application du procédé conforme à la présente invention.
La figure 2 est le schéma synoptique dudit système.
La figure 3 illustre schématiquement le fonctionnement du système des figures 1 et 2.

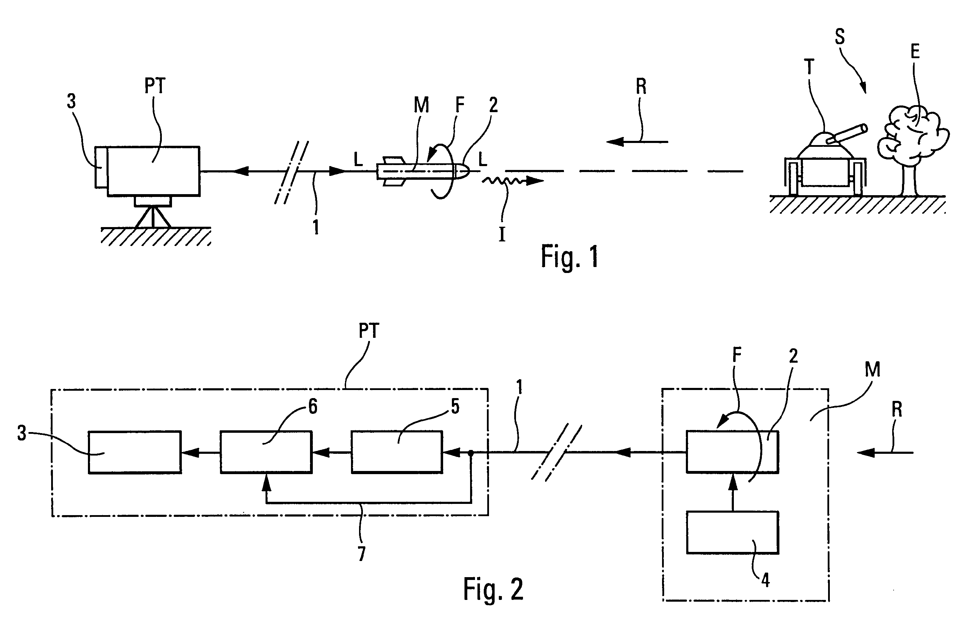

Sur la figure 1, on a représenté schématiquement un missile d'attaque M volant en direction d'une cible T, faisant partie, avec d'autres éléments E (dont un seul est représenté), d'une scène S. De plus, le missile M tourne autour de son axe longitudinal L-L, comme cela est illustré par la flèche circulaire F des figures 1 à 3.

Le missile M est lancé et guidé à partir d'un poste de tir PT, servi par au moins un opérateur (non représenté). Le missile M et le poste de tir PT sont reliés l'un à l'autre par une liaison 1, permettant l'échange d'informations. Une telle liaison 1 peut être réalisée par ondes hertziennes ou par un câble, électrique ou optique, se déroulant dudit missile M.

Le missile M porte, dans sa pointe avant, une caméra 2, par exemple électronique de type CCD ou CMOS, observant la scène S, de laquelle elle reçoit des rayons lumineux R. Eventuellement, ledit missile M comporte un illuminateur --éventuellement incorporé à la caméra 2-- éclairant ladite scène S, à laquelle il adresse des rayons lumineux I.

Par ailleurs, le poste de tir comporte un afficheur 3, sur lequel apparaissent les images de la scène S, prises par la caméra 2 et transmises audit afficheur 3 par la liaison 1.

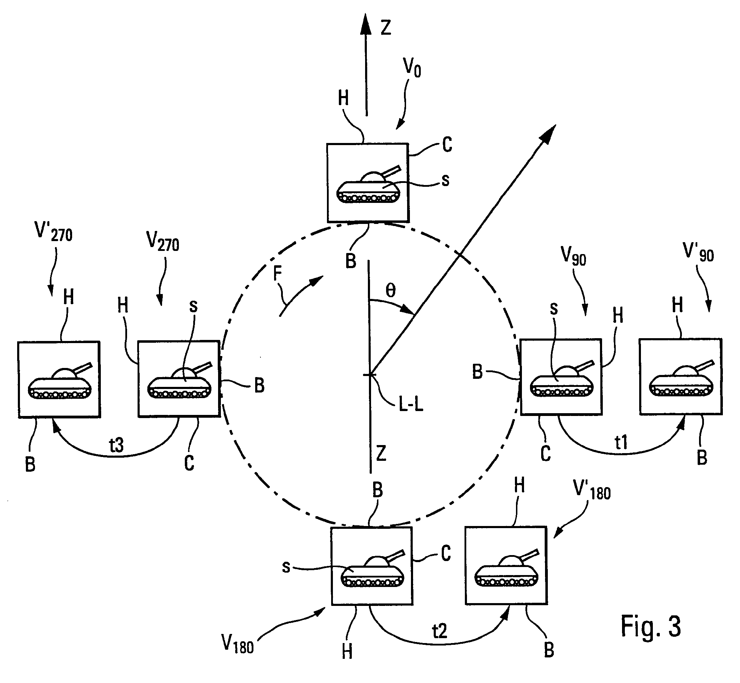

De façon usuelle, dans le missile M est de plus prévu un système gyroscopique 4, nécessaire aux mesures écartométriques concernant ledit missile. Par construction, le système gyroscopique 4 est apte à délivrer la valeur instantanée θ de l'angle de rotation du missile M par rapport à la verticale Z-Z (figure 3).

La caméra 2 est commandée par le système gyroscopique 4 de façon que, à chaque tour dudit missile autour de son axe longitudinal L-L, ladite caméra prenne une image V_{0'} V_{90'} V₁₈₀ et V₂₇₀ de la scène S lorsque l'angle θ prend chacune des valeurs 0°, 90°, 180° et 270° (voir la figure 3).

Ainsi, si la vitesse de rotation du missile M est comprise entre 5 et 10 tours par seconde, la caméra 2 prend de 20 à 40 images par seconde.

Pour éviter le flou des images, celles-ci sont acquises en un temps très court, en mode connu dit "snap shot", selon lequel on réalise une acquisition simultanée des images sur tous les pixels de la matrice sensible de la caméra 2, pendant un faible temps d'intégration.

Par ailleurs, le poste de tir PT comporte un dispositif d'acquisition d'images 5, recevant les images --sous forme électronique-- prises par la caméra 2 et transmises par la liaison 1. Il comporte de plus un dispositif de transformation géométrique d'images 6, intercalé entre le dispositif d'acquisition 5 et l'afficheur 3. Le dispositif de transformation géométrique d'images, généralement désigné par la dénomination WARPER, peut comporter, entre autres, le composant TMC 2301, fabriqué par la société américaine TRW LSI et désigné par l'appellation Image Resampling Sequencer.

Tout comme la caméra 2, le dispositif de transformation géométrique d'images 6 est séquencé par des signaux de séquencement provenant du système gyroscopique 4 et véhiculés par la liaison 1, comme symbolisé par la liaison 7.

Ainsi, comme cela est illustré par la figure 3, au cours d'un tour du missile M autour de son axe longitudinal L-L, la caméra 2 prend :
- une vue de référence V₀ sur laquelle apparaît l'image s (représentée uniquement par la silhouette de la cible T sur la figure 3) de la scène S, correspondant à θ = 0°, dont le contour C présente un bord inférieur B et un bord supérieur H ;
- une vue V₉₀ correspondant à θ = 90°, dont l'orientation a tourné de 90° par rapport à la vue de référence V_{0'} de sorte que maintenant les bords latéraux gauche et droit du contour C de ladite vue V₉₀ correspondent respectivement aux bords inférieur B et supérieur H du contour C de la vue de référence V₀ ;
- une vue V₁₈₀ correspondant à θ=180°, dont l'orientation a tourné de 180° par rapport à la vue de référence V_{0'} de sorte que maintenant les bords supérieur et inférieur du contour C de ladite vue V₁₈₀ correspondent respectivement aux bords inférieur B et supérieur H du contour C de la vue de référence V₀ ; et
- une vue V₂₇₀ correspondant à θ = 270°, dont l'orientation a tourné de 270° par rapport à la vue de référence V_{0'} de sorte que maintenant les bords latéraux gauche et droit du contour C de ladite vue V₂₇₀ correspondent respectivement aux bords supérieur H et inférieur B du contour C de la vue de référence V₀.

Pour assurer que, sur l'afficheur 3, la position relative de l'image s de la scène S et du contour C soit la même dans lesdites vues V_{0'} V_{90'} V₁₈₀ et V_{270'} le dispositif de transformation géométrique d'images 6 transforme :
- par une transformation t1, la vue V₉₀ en une vue V'_{90'} dans laquelle l'image s de la scène S est tournée de 90°, de façon que les bords inférieur et supérieur du cadre C de cette vue V'₉₀ correspondent respectivement aux bords inférieur B et supérieur H de la vue de référence V₀ ;
- par une transformation t2, la vue V₁₈₀ en une vue V'_{180'} dans laquelle l'image s de la scène S est tournée de 180°, de façon que les bords inférieur et supérieur du cadre C de cette vue V'₁₈₀ correspondent respectivement aux bords inférieur B et supérieur H de la vue de référence V₀ ; et
- par une transformation t3, la vue V₂₇₀ en une vue V'₂₇₀, dans laquelle l'image s de la scène S est tournée de 270°, de façon que les bords inférieur et supérieur du cadre C de cette vue V'₂₇₀ correspondent respectivement aux bords inférieur B et supérieur H de la vue de référence V₀.

Ainsi, les vues V_{0'} V'_{90'} V'₁₈₀ et V'₂₇₀ peuvent apparaître successivement sur l'afficheur 3 en donnant à l'opérateur l'impression de la continuité des images de la scène S.

Eventuellement, dans le cas défavorable d'un très faible éclairement de la scène S, les moyens d'illumination incorporés à l'appareil de prise de vues 2 sont mis en fonctionnement pour éclairer (rayons lumineux I) la scène S et augmenter l'éclairement de celle-ci en synchronisme avec les prises de vues dudit appareil 2. Ces moyens d'illumination comportent avantageusement une diode laser ou un laser Vcsel comme composant d'illumination.

## Revendications

1. Procédé pour la formation, sur un afficheur (3) disposé à un poste fixe (PT), d'images successives (s) d'une scène (S) vers laquelle se déplace un corps volant (M) en rotation autour de son axe longitudinal (L-L), ledit corps volant (M) communiquant avec ledit poste fixe (PT) grâce à des moyens de liaison (1),
**caractérisé en ce que** :
- on fixe rigidement un appareil de prise de vues (2) à l'avant dudit corps volant (M), de façon que ledit appareil (2) tourne avec ledit corps volant (M) autour dudit axe longitudinal (L-L) ;
- pendant chaque tour de la rotation dudit corps volant (M) autour dudit axe longitudinal (L-L), on prend, avec ledit appareil (2) commandé par des moyens (4) de commande, plusieurs vues de ladite scène (S) correspondant chacune à une position angulaire prédéterminée dudit corps volant autour dudit axe longitudinal, de sorte que les contours (C) desdites vues sont inclinés de façons différentes les uns par rapport aux autres et que, dans chaque vue, l'image (s) de ladite scène (S) et ledit contour (C) occupent une position relative qui dépend de ladite position angulaire prédéterminée correspondante dudit corps volant (M) et qui est différente de celle des autres vues, les moyens (4) de commande de l'appareil de prise de vues (2) étant constitués par un système gyroscopique monté à bord dudit corps volant (M) et sensible à la rotation de ce dernier autour de son axe longitudinal (L-L) ;
- parmi lesdites vues, on détermine une vue de référence (V₀) dans laquelle ladite position relative entre l'image (s) de la scène (S) et le contour (C) est considérée comme une position relative de référence ;
- dans chaque vue, autre que la vue de référence, on applique à l'image (s) de ladite scène (S) un traitement de transformation géométrique d'image pour que la position relative de l'image transformée de ladite scène par rapport au contour soit semblable à ladite position relative de référence ; et
- on affiche successivement sur ledit afficheur (3) ladite vue de référence et lesdites vues ayant subi ledit traitement de transformation géométrique d'image.

2. Système comportant :
- au moins un corps volant (M), tournant autour de son axe longitudinal (L-L) lorsqu'il vole ;
- un poste fixe (PT), muni d'un afficheur (3) apte à afficher des images d'une scène (S) vers laquelle se déplace en tournant ledit corps volant (M) ; et
- des moyens de liaison (1) permettant les communications entre ledit corps volant (M) et ledit poste fixe (PT),
**caractérisé en ce qu'**il comporte de plus :
- un appareil de prise de vues (2), fixé rigidement à l'avant dudit corps volant (M) pour observer ladite scène (S) ;
- des moyens (4) pour la commande dudit appareil de prise de vues (2) à chacune de plusieurs positions angulaires prédéterminées dudit corps volant (M) autour dudit axe longitudinal (L-L), les moyens (4) de commande de l'appareil de prise de vues (2) étant constitués par un système gyroscopique monté à bord dudit corps volant (M) et sensible à la rotation de ce dernier autour de son axe longitudinal (L-L) ; et
- des moyens (6) de traitement de transformation géométrique d'image permettant de présenter les vues prises par ledit appareil (2) à des positions angulaires différentes avec une position relative semblable de l'image (s) de ladite scène (S) par rapport au contour (C) desdites vues.

3. Système selon la revendication 2,
**caractérisé en ce que** lesdits moyens de traitement d'image (6) sont disposés au poste fixe (PT).

4. Système selon la revendication 3,
**caractérisé en ce que** la liaison entre ledit appareil de prise de vues (2) et lesdits moyens de traitement d'image (6) est réalisée par lesdits moyens de liaison (1) entre ledit corps volant (M) et ledit poste fixe (PT).

5. Système selon les revendications 2 et 3,
**caractérisé en ce que** le séquencement du fonctionnement desdits moyens de traitement d'image (6) est commandé par ledit système gyroscopique (4) par l'intermédiaire desdits moyens de liaison (1) entre ledit corps volant (M) et ledit poste fixe (PT).

6. Système selon l'une des revendications 2 à 5,
**caractérisé en ce qu'**il comporte des moyens d'illumination (2), montés à bord dudit corps volant (M) et aptes à éclairer ladite scène (S).

## Patentansprüche

1. Verfahren zur Erzeugung von aufeinanderfolgenden Bildern (s) einer Szene (S) auf einer Anzeigevorrichtung (3), die in einer ortsfesten Station (PT) angeordnet ist, wobei sich ein sich um seine Längsachse (L-L) drehender Flugkörper (M) gegenüber der Szene fortbewegt, wobei der Flugkörper (M) mit der ortsfesten Station (PT) mittels Verbindungsmitteln (1) kommuniziert, **dadurch gekennzeichnet, dass**:
- ein Bildaufnahmegerät (2) vorne an dem Flugkörper (M) derart befestigt wird, dass sich das Gerät (2) mit dem Flugkörper (M) um die longitudinale Achse (L-L) dreht;
- während jeder Umdrehung des Flugkörpers (M) um die Längsachse (L-L) mit dem von Steuermitteln (4) gesteuerten Gerät (2) mehrere Ansichten der Szene (S) aufgenommen werden, von denen jede einer vorbestimmten Winkelposition des Flugkörpers um die Längsachse entspricht, derart dass die Konturen (C) der Ansichten untereinander auf unterschiedliche Weisen geneigt sind und dass in jeder Ansicht, das Bild (s) der Szene (S) und die Kontur (C) eine relative Position einnehmen, die von der entsprechenden vorbestimmten Wickelposition des Flugkörpers (M) abhängt und die sich von denen der anderen Ansichten unterscheidet, wobei die Steuermittel (4) des Bildaufnahmegerätes (2) durch ein gyroskopisches System gebildet sind, das an Bord des Flugkörpers (M) montiert ist und das für die Rotation des Letzteren um seine Längschse (L-L) empfindlich ist;
- unter den Ansichten eine Referenzansicht (V₀) bestimmt wird, in der die relative Position zwischen dem Bild (s) der Szene (S) und der Kontur (C) als eine relative Referenzposition betrachtet wird;
- in jeder Ansicht, außer der Referenzansicht, auf das Bild (s) der Szene (S) eine geometrische Bildtransformations-Bearbeitung angewendet wird, damit die relative Position des transformierten Bildes der Szene in Bezug auf die Kontur der relativen Referenzposition ähnlich ist; und
- auf der Anzeigeeinrichtung (3) nacheinander die Referenzansicht und die Ansichten angezeigt werden, die der geometrischen Bildtransformations-Bearbeitung unterzogen wurden.

2. System, umfassend:
- wenigstens einen sich im Flug um seine Längsachse (L-L) drehenden Flugkörper (M);
- eine ortsfeste Station (PT), die mit einer Anzeigeeinrichtung (3) versehen ist, die geeignet ist, Bilder einer Szene (S) anzuzeigen, gegenüber der sich der Flugkörper (M) drehend fortbewegt; und
- Verbindungsmittel (1), welche die Kommunikation zwischen dem Flugkörper (M) und der ortsfesten Station (PT) gestatten, **dadurch gekennzeichnet, dass** es ferner umfasst:
- ein Bildaufnahmegerät (2), das vorne an dem Flugkörper (M) starr befestigt ist, um die Szene (S) zu beobachten;
- Mittel (4) zur Steuerung des Bildaufnahmegerätes (2) an jeder der mehreren vorbestimmten Winkelpositionen des Flugkörpers (M) um die Längsachse (L-L), wobei die Steuermittel (4) des Bildaufnahmegerätes (2) durch ein gyroskopisches System gebildet sind, das an Bord des Flugkörpers (M) montiert ist und für die Rotation des Letzteren um seine Längsachse (L-L) empfindlich ist; und
- Mittel (6) zur geometrischen Bildtransformations-Bearbeitung , die es gestatten, die Ansichten, die von dem Bildaufnahmegerät (2) an unterschiedlichen Winkelpositionen aufgenommen wurden, mit einer relativen Position anzuzeigen, die dem Bild (s) der Szene (S) in Bezug auf die Kontur (C) der Ansichten ähnlich ist.

3. System nach Anspruch 2, **dadurch gekennzeichnet, dass** die Bildbearbeitungsmittel (6) in der ortsfesten Station (PT) angeordnet sind.

4. System nach Anspruch 3, **dadurch gekennzeichnet, dass** die Verbindung zwischen dem Bildaufnahmegerät (2) und den Bildbearbeitungsmitteln (6) durch die Verbindungsmittel (1) zwischen dem Flugkörper (M) und der ortsfesten Station (PT) verwirklicht wird.

5. System nach den Ansprüchen 2 und 3, **dadurch gekennzeichnet, dass** die Abfolge der Funktion der Bildbearbeitungsmittel (6) durch das gyroskopische System (4) über die Verbindungsmittel (1) zwischen dem Flugkörper (M) und der ortsfesten Station (PT) gesteuert wird.

6. System nach einem der Ansprüche 2 bis 5, **dadurch gekennzeichnet, dass** es Beleuchtungsmittel (2) aufweist, die an Bord des Flugkörpers (M) montiert und geeignet sind, die Szene (S) zu beleuchten.

## Claims

1. A method for the formation, on a display (3) stationed at a fixed post (PT), of successive images (s) of a scene (S) towards which a flying body (M) is moving while rotating about its longitudinal axis (L-L), said flying body (M) communicating with said fixed post (PT) by virtue of linking means (1), **characterized in that**
- a picture-taking apparatus (2) is fixed rigidly to the front of said flying body (M), in such a way that said apparatus (2) turns with said flying body (M) about said longitudinal axis (L-L);
- during each revolution of the rotation of said flying body (M) about said longitudinal axis (L-L), several pictures of said scene (S) each corresponding to a predetermined angular position of said flying body about said longitudinal axis are taken with said apparatus (2), so that the contours (C) of said pictures are inclined in mutually differing manners and that, in each picture, the image (s) of said scene (S) and said contour (C) occupy a relative position which depends on said corresponding predetermined angular position of said flying body (M) and which is different from that of the other pictures, said means (4) of control of the picture-taking apparatus (2) consisting of a gyroscopic system mounted on board said flying body (M) and sensitive to the rotation of the latter about its longitudinal axis (L-L);
- among said pictures, a reference picture (V₀) is determined in which said relative position between the image (s) of the scene (S) and the contour (C) is considered to be a relative reference position;
- in each picture, other than the reference picture, a geometrical image transformation processing is applied to the image (s) of said scene (S) so that the relative position of the transformed image of said scene with respect to the contour is similar to said relative reference position; and
- said reference picture and said pictures having undergone said geometrical image transformation processing are displayed successively on said display (3).

2. A system comprising:
- at least one flying body (M), rotating about its longitudinal axis (L-L) as it flies;
- a fixed post (PT) furnished with a display (3) able to display images of a scene (S) towards which said flying body (M) is moving while rotating; and
- linking means (1) allowing the communications between said flying body (M) and said fixed post (PT),
**characterized in that** it furthermore comprises:
- a picture-taking apparatus (2), fixed rigidly to the front of said flying body (M) so as to observe said scene (S);
- means (4) for the control of said picture-taking apparatus (2) at each of several predetermined angular positions of said flying body (M) about said longitudinal axis (L-L), said means (4) of control of the picture-taking apparatus (2) consisting of a gyroscopic system mounted on board said flying body (M) and sensitive to the rotation of the latter about its longitudinal axis (L-L); and
- means (6) of geometrical image transformation processing making it possible to present the pictures taken by said apparatus (2) at different angular positions with a similar relative position of the image (s) of said scene (S) with respect to the contour (C) of said pictures.

3. The system as claimed in claim 2,
**characterized in that** said image processing means (6) are stationed at the fixed post (PT).

4. The system as claimed in claim 3,
**characterized in that** the link between said picture-taking apparatus (2) and said image processing means (6) is effected by said means of linking (1) between said flying body (M) and said fixed post (PT).

5. The system as claimed in claims 2 and 3,
**characterized in that** the sequencing of the operation of said image processing means (6) is controlled by said gyroscopic system (4) by way of said means of linking (1) between said flying body (M) and said fixed post (PT).

6. The system as claimed in one of claims 2 to 5,
**characterized in that** it comprises means of illumination (2), mounted on board said flying body (M) and able to light said scene (S).
